# EUROPEAN PATENT SPECIFICATION

(11) **EP 1 643 224 B1**
(45) Date of publication and mention of the grant of the patent: **29.10.2008**
(21) Application number: 05021441.0
(22) Date of filing: 30.09.2005
(51) Int. Cl.: G01J 3/02, G01J 3/51, G01N 21/25

(54) **Method and apparatus for improved colorimetry**
Verfahren und Vorrichtung für verbesserte Kolorimetrie
Procédé et dispositif de colorimétrie améliorée

(30) Priority: 30.09.2004 US 614257 P; 15.02.2005 US 653048 P
(43) Date of publication of application: 05.04.2006
(60) Divisional application: 06005167.9
(73) Proprietor: X-Rite Europe GmbH, 8105 Regensdorf (DE)
(72) Inventor: Lianza, Thomas A., Bedford, NH 03110 (US); Federico, Richard A., Reading, MA 01867 (US); Lutz, Carl D., Auburn, NH 03032 (US)
(74) Representative: Schwabe - Sandmair - Marx

(56) References cited:
- EP-A- 0 495 569
- US-A- 3 675 984
- US-A- 4 632 559
- US-A1- 2004 114 144
- US-B1- 6 459 485

## Description

### BACKGROUND

### 1. Cross-Reference to Related Application(s)

The present application claims the priority of co-pending, commonly assigned provisional patent applications entitled "Colorimeter with Optical Geometry and Assembly Means to Improve Signal to Noise Ratio" which was filed on September 30, 2004 and assigned Serial No. 60/614,257 and "Improved Colorimetry by Proper Handling of Ambient Light" which was filed on February 15, 2005 and assigned Serial No. 60/653,048.

### 2. Technical Field

The present disclosure relates to colorimeters, and more particularly, to a colorimeter with optical geometry and assembly that provides a high signal-to-noise ratio (SNR) and/or properly handles ambient light.

### 3. Background Art

Colorimeters are accurate devices for measuring the spectral content of light emitted either directly or indirectly from a given source. Standards bodies such as the Video Electronics Standards Association (VESA) have been a driving force behind the development of colorimeter performance. The VESA 1.0 standard, for example, is primarily directed to specifying measurement of contrast ratio, and is limited to a no greater than +/- 2 degree viewing angle from the source to the sensor.

However, typical devices being measured, such as computer displays, are actually viewed from much greater angles than specified in the standards. To further exacerbate this situation, the degradation of spectral parameters that occurs with increased viewing angle, does not occur equally for all colors. Such incompatibilities have yet to be resolved or otherwise addressed. In addition, early devices developed under the standards were relatively costly. Such devices typically employ highly accurate measurement optics. Apertures have frequently been used in conjunction with lenses or other precision optical elements. Typical colorimeter configurations include a light sensing diode, and an integral lens that directs light to the sensor area.

More recent developments have produced designs resulting in low cost colorimeters with performance characteristics approaching or exceeding professional quality required by the standards. Such newer designs generally employ basic aperture geometry, and either non-overlapping or overlapping spectral ranges/filters. One such design uses a unique aperture plate that has oblong holes, and is spaced between the target surface and the filter/sensor set. The resulting field of view is about .+-.15 degrees or more on each axis.

However, such a design does not correspond to the field of view of the human eye.

Rather, it is about four times too large. Also, the position of the aperture plate is spaced from the target surface by a mounting distance that is typically defined by one to four relatively large suction cups (i.e., one at each corner of the colorimeter housing). Such designs generally cause variations in the mounting distance due to leaking-based relaxation of the suction cups.

This variation, in conjunction with a fixed-distance between the aperture plate and the sensor, causes the field of view to vary as well, and adversely impacts the accuracy of color measurements taken.

In addition, colorimeter designs generally require alignment of the sensor to one or more optical paths. This alignment is typically provided by a secondary reference surface on the sensor diode. However, this sensor reference does not assure accurate alignment of the sensor in the plane parallel to the measured surface, and there is no means for locating the center of the senor lens to the center of the optical path. Such limitations contribute to undesirable decay of the SNR, as well as to inadequate color measurement accuracy.

While prior art colorimeters concentrated on measurement of what the sensor "sees", effects on perception resulting from ambient light impinging upon the source has eluded the existing colorimeter art. Colorimeter performance can be greatly degraded by ambient light effects of: 1) image perception of the human eye in the presence of varying ambient conditions, 2) ambient light reflected from the display screen integrated with the display screen image source, 3) flare, and other factors.

A metaphoric example of the types of perceived changes in "viewed monitor" systems in the presence of changing ambient light conditions follows below. When viewing automotive headlights in the daylight, they appear yellowish and dim. However, when viewing the headlights at night, they appear bright and white or blue white. This example highlights how important it is to calibrate for ambient light conditions in order to get quality results in a monitoring/viewing/measurement system.

In general, viewing a screen in dim ambient conditions leads to a perception of less color. If this in turn leads to arbitrary adjustment of the brightness control (when available such as with analog displays), system calibration can be severely hampered.

An attribute of a good colorimeter is the ability to anticipate the effects of ambient light on the source as perceived by the viewer and correct for such effects. Brightness controls on displays are notoriously non-linear. Uncalled for adjustment of brightness by the user can introduce severe degradation of contrast, linearity and perceived anomalies. Further image contrast and the ability to discern detail at different levels of image luminosity can be adversely affected by ambient illuminance of the area immediately adjacent to the image.

In one instance known to the inventors, a product distributor, LaCie, adapts only for intensity of ambient light, ignoring colorimetric content. However this solution also requires that the sensor be reversed to make the ambient reading. While it has been recognized that ambient light presents many problems and challenges to colorimeter measurement quality, to date the most sophisticated approaches are limited to taking a reading of the ambient at a point, and then depending on that measurement of ambient light for all ensuing ambient light compensation. Typically this is accomplished by turning the colorimeter away from the source image to take a reading of the ambient light. In some instances a diffuser is placed on the colorimeter to improve the specific and single measurement.

Previously disclosed embodiments of a colorimeter by the assignee of the present application measured ambient light by removing the colorimeter body from the image source screen, placing a diffuser on the viewing surface of the colorimeter, and orienting the combination away from the screen to get a reading estimate of the ambient light.

Nonlinearities of displays, complexity of color measurement, response of the human eye, effects of viewing room ambient conditions, measurement degradation due to extraneous other factors and the interactions between the factors make measurement and compensation challenging at the least. It is desired to maximize the S/N (signal/noise ratio) by controlling the ambient light effects within the system such as: flare, reflected light, extraneous light rays impinging on the sensor and numerous other sources of light impinging on the sensor that are not primary source generated rays. Therefore, a colorimeter is desired that takes into account the effects of ambient light impinging on the source image (LCD, CRT screen, etc.).

Further, there is a desire for making the colorimeter measurements agree more with the ambient light that impinges on the source image and reading the ambient light on an ongoing basis to make important corrections in a varying ambient light environment. It is further recognized that it would be a desirable feature of a colorimeter to be able to alert the user to real time changes in ambient viewing light that are deemed sufficient to effect the perceived attributes of the image.

In sum, an improved colorimeter design is desired having optimal or otherwise increased SNR, that has a field of view that corresponds to that of the human eye and that has the ability to continually sense ambient light impinging on the source image. In a more general sense, an improved colorimeter design is desired for accurately measuring color from the likes of displays, CRTs, LCDs, and printed or pictorial materials.

US 6.459.485 (B1) discloses an optical system used in an optical measuring apparatus for measuring optical characterists of a liquid crystal display panel. The system guides rays emitted from the LCD panel and has exit angles equal to or smaller than a predetermined maximum exit angle. A cylindrical chamber is placed in front of a lens.

US 4.632.559 discloses the following: Reflectance apparatus is disclosed for obtaining measurement of nonspecular reflected light in which controlled light rays are directed by means of a lens and transmission path from a light source through a light trap to expose or illuminate a specimen and nonspecular reflected light is passed from the specimen through the light trap along a transmission path to one or more detectors where the nonspecular reflected light is measured.

EP 0 495 569 A2 discloses the following: A monochromator having a stray light trap which substantially directs stray light away from light of wavelength of interest and/or absorb the stray light so as to substantially reduce the stray light component in the light of interest. The monochromator has internal surfaces each having one of several optical characteristics.

US-A-3.675.984 discloses a contact endoscope featuring a cylindrical hollow light collecting member made of transparent material and having smooth internal and frosted external surfaces. A sight is fastened at one of the cylindrical collector extremities and a light guide is located coaxially to the other extremity of said collector and has a viewing distal face. The endoscope is characterized in that an optical unit actions as a stray light trap is located inside the cylindrical collector.

### SUMMARY OF THE DISCLOSURE

The present disclosure provides advantageous to maximizing the signal-to-noise ratio of a colorimeter sensing light emitted from a target surface by matching the colorimeter' s field of view to that of the human eye for devices that measure target surfaces (e.g., displays, CRT's, LCD's, printed, and pictorial materials), commonly viewed by humans. Further, the present disclosure provides advantageous to accounting for the effects on perception resulting from ambient light impinging upon the target surface.

Accordingly, the inventive color sensing device of the present disclosure comprises the features of claim 1.

In an exemplary embodiment of the present disclosure, the color sensing device for sensing light emitting from a target surface includes three or more light sensors. Each sensor is configured to detect light from the target surface. The device includes a sensor locating element having three or more light passages and corresponding alignment features. Each alignment feature is adapted to receive a locating feature of a corresponding sensor, thereby aligning each sensor with a corresponding light passage. The device also includes a chamber block operatively coupled in alignment with the sensor locating element. The chamber block has three or more filter cavities and corresponding light passages. Each light passage is in alignment with a corresponding light passage of the sensor locating element. Each light passage is configured having an entry orifice, exit orifice and an intermediate chamber. The entry orifice faces the target surface and is defined with an entry wall defining an entrance for emitted light from the target surface into the light passage. The exit orifice faces the sensor and is defined with an exit wall defining an exit for the emitted light from the light passage. The chamber intermediate the entry and exits walls is defined by a chamber wall having a diameter larger than a diameter of the entry and exit walls. The device also includes three or more distinct light filter stacks including one or more filter elements. Each filter stack is placed in a corresponding one of the filter cavities, thereby providing three or more overlapping spectrally selective channels, with each spectrally selective channel designed to provide a pre-defined field of view between the target surface and a corresponding one of the light sensors. The

In another exemplary embodiment of the present disclosure, the color sensing device for sensing light emitting from a target surface includes a first housing; three or more light sensors disposed with the first housing and facing the target surface; a chamber block having at least three spectral light passages extending through the chamber block configured to select a preferred field of view between the target surface and a corresponding light sensor adapted to detect light from the target surface; and an ambient light sensor disposed at one of with and within the first housing facing ambient light impinging the target surface without the need to reorient the first housing relative to the target surface. The ambient sensor continuously reads the impinging light while the three or more light sensors simultaneously read the light attributes emanating from the target surface.

Additional advantageous features and functions associated with the disclosed apparatus and method will be apparent from the detailed description which follows, particularly when viewed in conjunction with the appended figures.

### BRIEF DESCRIPTION OF THE DRAWINGS

So that those of ordinary skill in the art to which the subject disclosure pertains will more readily understand how to make and use the systems and methods described herein, aspects of preferred embodiments of the present disclosure will be described in detail with reference to the drawings, wherein:
Figure 1 is an exploded view of a HTF light tunnel sensor of a target colorimeter configured with a tube block in accordance with the prior art;
Figure 2 is a partial cross section view of the prior art tube block of Figure 1;
Figure 3 is a partial cross section view of a chamber block replacing the tube block of Figure 1, the chamber block illustrating a chamber and corresponding entry and exit orifices in accordance with the present disclosure;
Figure 4 is another cross section view of the chamber block of Figure 3 including an internal baffle disposed in the chamber according to the present disclosure;
Figure 5 is another cross section view of the chamber block of Figure 3 including an external baffle disposed outside the chamber block and proximate the entry orifice according to the present disclosure;
Figure 6 is a simplified schematic diagram illustrating a colorimeter for simultaneously measuring ambient light illumination impinging on a source image and the attributes of the luminance emanating from the source image in accordance with the present disclosure;
Figure 7 is a simplified schematic diagram of another colorimeter for simultaneously measuring ambient light illumination impinging on the source image and the attributes of the luminance emanating from the source image having a light-pipe directing the ambient light to an associated rear-facing sensor;
Figure 8 is a front perspective view of a colorimeter similar to the colorimeter shown in Figure 7 illustrating a plurality of light emitting diodes (LEDs) to indicate a status of the colorimeter to a user;
Figure 9 is a rear perspective view of the colorimeter of Figure 8 illustrating an external baffle with three apertures for receiving luminance emanating from the source image therethrough;
Figure 10 is an exploded front perspective view of Figure 8 illustrating a housing, PCB and light pipe of the colorimeter with a front cover removed;
Figure 11 is a front perspective view of the colorimeter of Figure 10 with the light pipe and front cover removed;
Figure 12 is an exploded rear perspective view illustrating an orientation of sensors, chamber, orifices and PCB after removing front and rear covers and the light-pipe from the colorimeter shown in Figure 11;
Figure 13 is a front perspective view of a colorimeter housing that can be affixed to a monitor (other than on a display screen) to conveniently hold the colorimeter when not in use; and
Figure 14 is a rear perspective view of the colorimeter housing of Figure 13.

### DETAILED DESCRIPTION OF EXEMPLARY EMBODIMENT(S)

Embodiments of the present invention provide colorimeters capable of measurement of emitted light from sources that are static such as LCD displays, illuminated printed or graphic matter, and/or temporally active such as CRT displays or strobed printed and graphic matter. The assembly and configuration of the device operates to maximize the signal-to-noise ratio (SNR), as well as to provide an optimal field of view that simulates the field of view of the human eye. Geometric elements and features of the device design, in conjunction with the assembly procedure, assure precise alignment of optical elements including sensors, filters, and other elements within the enclosure and optical path.

One particular embodiment of the device is configured with a viewing angle or field of view (FOV) in the range of +/- 5 to 7 degrees. This FOV is near optimum for achieving the desired performance for the low cost colorimeter, and effectively matches the human eye field of view. A chamber block element, which can be sized to fit into the existing products, has a number of light passage chambers, the chamber being configured relative to entry and exit orifices of each light passage is positioned, configured and dimensioned to meet the +/- 5 to 7 degree requirement to achieve the desired FOV. The chamber block can be molded from a material that minimizes reflectance of the chamber walls, thereby preserving the selected FOV.

In addition, the chamber block is configured with guide pins and a number of filter stack cavities which allow for alignment of the sensors and their respective molded lenses to the center of the optical field. The device components, such as the sensors, filters, printed circuit board (PCB), molded chamber block, housing, and other system elements can be assembled prior to soldering the sensors to the PCB. These self-aligning and pre-solder assembly qualities enable a significantly improved SNR relative to conventional devices e.g., four to five times higher).

Crushable ribs can be employed during assembly to provide a compliance that both preserves filter integrity, while simultaneously providing adequate clamping force to hold system elements in place. The device is not affected by mounting compliance or other variable factors. The design enables different filter sets to provide overlapping or non-overlapping spectrally selective channels. In operation, the colorimeter characterizes the measured target surface as the human eye would see it, including both the human eye's color response and field of view. In the case of a display screen, the device can be configured to detect the type of display. Thus, a low cost high accuracy colorimeter is provided.

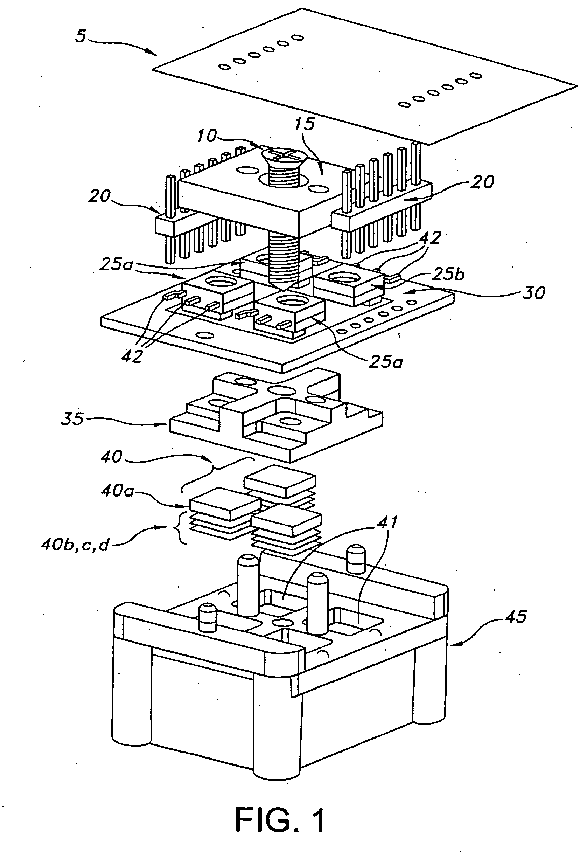

FIG. 1 is an exploded view of a prior art colorimeter assembly configured in accordance with one disclosed in Application Serial No. 10/684,864, filed October 14, 2003, entitled "Colorimeter with High SNR", the contents of which are incorporated herein in their entirety. As can be seen, the assembly includes a sensor shield 5, a clamping screw 10, a clamping block 15, pin headers 20 and a corresponding PCB assembly 30, a number of sensors 25a-b, a sensor locating element 35, a number of filter stacks 40, and a tube block 45. Other components and features, such as a dust cover, cabling, and colorimeter circuitry, may also be included in the design as will be apparent in light of this disclosure.

The assembly procedure will be apparent from FIG. 1. Three filter stacks 40, each of which includes a glass layer 40a and three filter layers 40b-d, are placed in respective cavities of the tube block 45. Each cavity has a centrally located light passage that travels through the tube block 45 to allow intake of light from a target surface. The sensor locating element 35 is placed onto the tube block 45 via center guide pins to secure the filter stacks 40 in their cavities. The lead frame PCB assembly 30 is placed into position on the tube block 45 via a set of end guide pins. Three light-to-frequency sensors 25a and a light-to-voltage sensor 25b are placed in their respective positions, so that the lens of each sensor 25 is received into an lens alignment hole of the sensor locating element 35, thereby enabling filtered light to be received via the corresponding light passage. The clamping block 15 is placed over the sensors 25 via the guide pins of the tube block 45. The clamping screw 10 is torqued to secure the assembly. The sensor leads can then be soldered to the PCB assembly 30. Note that functional testing of the device can be performed before and/or after the soldering (assuming the unsoldered leads are in proper electrical contact). The sensor shield 5 can be installed over and/or around the clamping block 15 to prevent extraneous light from entering the back of the device, which reduces measurement accuracy. Also, a removable dust cover 5 can be coupled with the target surface side of the tube block 45 to protect the device until its use.

These particular sensor features are part of the manufacturer's design, and are accommodated by the designated features of the sensor locating element 35. In one particular embodiment, for example, sensors 25a are each a Texas Instruments TSL235 light-to-frequency converter, and sensor 25b is a Texas Instruments TSL250R light-to-voltage converter. It will be appreciated in light of this disclosure that other sensors types, shapes, and configurations can be used here as well.

Note that the clamping block 15 and the sensor locating element 35 can be fabricated in a similar fashion as the tube block 45 (e.g., a molded material having a low reflectance, such as black ABS/PC plastic). Further note that the overall assembly can be mated to a primary PCB which contains all ancillary circuits to accomplish colorimeter functions, such as spectral measurement, spectral translations to standard coordinate systems, integration of samples, determination of display type, timing, and other required functionality.

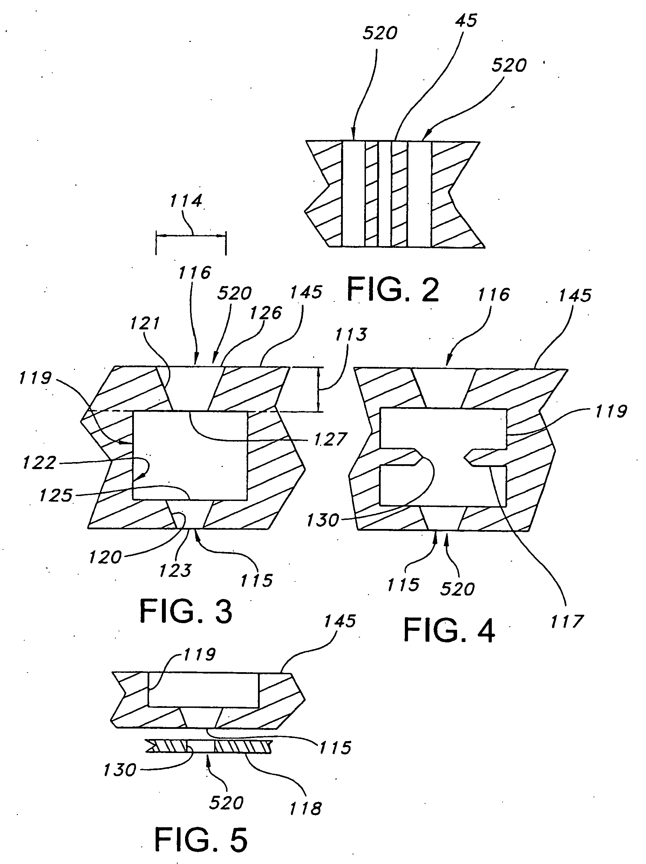

FIG. 2 is a cross sectional view of the tube block assembly 45 of FIG. 1 illustrating a pair of light passages 520 extending therethrough having a cylindrical or tube shape and having substantially the same diameter along a length thereof.

The inventors prior filing in Application Serial No. 10/684,864, Lutz, et al . describes a complete colorimeter with tile physical body geometry optimized for maximum SNR including an optical tube body (tube block member 45 of cited application), and further includes other mechanical, electronic and software elements as disclosed in U. S. Patent No. 5,892,585. Among the geometric features cited in the preceding was the statement: "The molded material for the tubes was filled material that minimized the reflectance of the walls of the tube, preserving the proper selection of the field of view." This was an important feature for maximizing SNR and a significant improvement over prior art. However, further research testing and evaluation has led to the conclusion that there was some residual reflection from the tube walls, which has been corrected by the refinement disclosed herein (e.g., replacing the cylindrical tube with a chamber with recessed walls and other features which may also include use of material with minimum reflectance).

As a further improvement, the inventors redesigned the tube block 45 by removing the walls of each tube, and replacing them with a respective chamber. The chamber was so designed that the entrance and exit orifices of each tube remained intact. This positioning and design of the orifices preserved two advantages of the tube geometry: 1) the ability to optimize for the angular field of view of the instrument, and 2) the rejection and elimination of light rays not traveling in the desired direction that would deteriorate the SNR if not eliminated. Further, the chamber is designed so that the walls of the chamber are oriented to minimize reflectance of extraneous rays from reaching the sensor. T he tube block disclosed in the prior application from the inventors included a tube block element (45), consisting of cylindrical tubes from the entry orifice to the sensor of each optical channel of the colorimeter. In the exemplary embodiments disclosed herein, each tube is replaced with a chamber having recessed walls or larger diameter walls than the entry and exit orifices, with one chamber per sensing channel.

It has been found that by replacing the walled tube with remote-walled chambers, or recessed chambers, has further improved the SNR of the instrument by significantly reducing extraneous noise rays. An exemplary embodiment of the new chamber block is desirably molded as a two part chamber block consisting of a member with the chambers and respective front orifices and a member with respective rear orifices which also can be used to aid in the final positioning and alignment of the optical sensors. These two members constitute the chamber block cited herein as a significant improvement over the previously disclosed tube block while preserving all of the other features of the inventors prior art.

Further, in addition to replacement of each tube with a corresponding chamber, baffles may be added to further improve the SNR ratio. The baffles can be disposed either within the chambers or, outside of the chamber (as in proximity to the entrance and exit or both).

Referring now to Figure 3, a partial cross section view of a chamber block 145 is illustrated showing a light passage therethrough in accordance with the invention. It should be noted that chamber block 145 may be substituted for the tube block 45 of Figure 1. It will also be noted that referenced elements 110-119 represent the features of the improved geometry disclosed herein. Other elements referenced as elements 5-41 (with the exception of 110-119) are used to provide a description of the prior invention for which the new material disclosed herein pertains to the disclosed improvement.

The invention disclosed herein represents a collection of geometric parts and certain key features associated with these parts to optimize the field of view (favoring approach to that of the human eye response), SNR ratio, selection of materials and geometry with respect to reflectance, clamping of the assembly without deforming the filters, free floating of the sensors during clamping followed by soldering in place after clamping, providing dust protection and securing parts in place for ease of assembly.

As described above with reference to Figures 1 and 2, in conjunction with Figure 3, clamping block 15 has bump features (not shown) to apply a clamping pressure on the back of the sensor 25. Sensor 25 fits between clamping block 15 and sensor locating element 35. Sensor locating element 35 mates to sensor 25 with semicircular referencing lens alignment feature (not shown) forcing intimated contact with the reference lens alignment feature to establish alignment of the lens with the center of the remainder of the optical path consisting of elements: light passage 520, filter stacks 40, filter stack cavity 41 of chamber block 145, field control orifices 115, 116 of chamber block 145, and a clear dust cover or sensor shield 5. Further, a planar locating reference surface of sensor 25 mates with locating element planar reference surface of sensor locating element 35 to assure planar alignment of the sensor 25 parallel to the target surface or source image (not shown).

As in Application Serial No. 10/684,864, lead frame/PCB assembly 30 positions the collection of optical elements between clamping block 15 and sensor locating element 35. It is so designed that it provides a soldering point for connecting sensor 25 to the system electronics.

Filter stack cavity 41 of chamber block 145 provides a means for accommodating a variety of filter combinations within filter stack 40 to characterize a measurement channel spectrally. Field control entry orifice 115 and exit or 116 of chamber block 145 have an optimally calculated and derived orifice diameter 114 and a length 113 that is determined by the respective orifice diameter 114 and calculations that derive the optimal field of view.

Clamping of the entire assembly, including clamping block 15, sensor(s) 25, sensor locating element 35 and chamber block 145, is accomplished by tightening clamping screw 10 to chamber block 145 and secured by screwing screw 10 into a threaded hole of the chamber block 145.

During this entire assembly process, the sensor 25 is free to float and locate as described in the clamping procedure description above with reference to Figure 1. Each of the sensors 25 becomes accurately aligned as a result of the design and the clamping action of tightening clamping screw 10. After clamping, the sensor leads 42 are soldered to the lead frame/PCB assembly 30. Dust cover or sensor shield 5 fits over the exposed surface of the colorimeter to block entry of dust and other contaminants.

Electrical tape is used at several locations during fabrication to facilitate assembly. The assembly discussed embodies all of the features of the invention. This assembly in turn mates to the system's primary PCB which contains all ancillary circuits to accomplish: spectral measurement, spectral translations to standard coordinate systems, integration of samples, determination of display type, timing, and other required elements.

Also necessary to the successful operation of the invention are a number of software and firmware routines that the inventors have developed to achieve the objectives of the invention with optimum performance. These software, firmware, and circuit functions are largely described in U.S. Patent No. 5,892,585 incorporated herein by reference in its entirety.

Referring again to Figure 3, the chamber block 145 is illustrated for use with the inventive color sensing device for sensing light emitted from a target surface. Chamber block 145 includes at least three overlapping spectral light passages 520 (only one shown) extending through the chamber block 145 configured to select a preferred field of view between the target surface and a corresponding sensor 25 adapted to detect light from the target surface. Each light passage 520 includes entry orifice 115 facing the target surface (not shown). The entry orifice 115 is defined with an entry wall 120 defining an entrance for emitted light from the target surface into the light passage 520. The exit orifice 116 facing a respective sensor 25 is defined with an exit wall 121defining an exit for the emitted light from the light passage 520. The chamber 119 is disposed intermediate the entry and exits walls 120, 121, respectively. The chamber 119 is defined by a chamber wall 122 having a diameter larger than a diameter of either of the entry and exit walls 120, 121, respectively. Figure 3 illustrates that both the entry and exit walls 120, 121 each form a frustoconical orifice. However, it is contemplated that the exit wall may be cylindrical, having a substantially constant diameter along a length thereof.

The entry orifice 115 is defined with an entry opening 123 to the chamber block 145 having a diameter smaller than a first opening 125 to the chamber 119. Further, the exit orifice 116 is defined with an exit opening 126 to the chamber block 145 having a diameter larger than a second opening 127 to the chamber 119. The first and second openings 125, 127 defining opposite openings of the chamber 119 connected to the entry and exit walls, respectively.

As best seen with reference to Figure 5, the chamber block 145 may be a two part separable chamber block 145. More specifically, chamber block 145 is desirably molded as a two part chamber block comprising two separable members to aid in the final positioning and alignment of the optical sensors. Further, with reference to Figures 4 and 5, the chamber block may include a baffle 117, 118 having an aperture 130 aligned with the light passage 520 of the block 145. The baffle 117, 118 may be disposed inside the chamber 119 (Figure 4) or outside the chamber 119 in proximity of the entry or exit orifices 115, 116, respectively, (Figure 5) to eliminate or minimize extraneous light rays that might reach the sensor 25 and degrade the signal-to-noise ratio.

Figure 4 depicts the baffle 117 disposed inside the chamber 119. Further, the corresponding aperture thereof is defined by a by countersink on opposite surfaces defining the baffle 117. Figure 5 depicts the baffle disposed outside the block 145 and spaced from a respective corresponding entry orifice 115.

The principles of the present disclosure discussed above may be employed by any colorimeter or similar sensing device. One such colorimeter design is described in detail in U.S. Patent No. 5,892,585. Note that a number of software and firmware routines can be used to achieve optimum colorimeter performance. Example software, firmware, and circuit functions are also described in the U.S. Patent No. 5,892,585. Generally, a colorimeter is designed to simulate the color response of a human eye. An RGB result is calculated based on the colorimeter channel outputs (e.g., X, Y, and Z).

In addition, mounting techniques can be employed to further improve the device performance, such as the mounting techniques described in U.S. application Ser. No. (not yet known), filed Oct. 14, 2003, titled "Sensor with Suction Cup Array Mount" <attorney docket number S1004-US>, and in U.S. application Ser. No. (not yet known), filed Oct. 14, 2003, titled "Colorimeter with Single Cable Low Impact Mounting System" <attorney docket number S1005-US>.

As discussed above in the background, it has been recognized that ambient light presents many problems and challenges to colorimeter measurement quality. To date the most sophisticated approaches are limited to taking a reading of the ambient at a point and then depending on that measurement for all ensuing ambient light compensation. Typically this is accomplished by turning the colorimeter away from the source image to take a reading of the ambient light. In some instances a diffuser is placed of the colorimeter to improve the specific and single measurement.

The applicants recognize the need to maximize the signal-to-noise ratio of any colorimeter and address matching the colorimeter's field of view to that of the human eye for devices that measure targets (displays, CRT's, LCD's, printed, and pictorial materials, for example, but not limited thereto) commonly viewed by humans, and further the need to compensate for the effects of ambient light reaching the sensor. Still further, the applicants recognize that if one could compensate for the perception of the human eye in the presence of ambient light impinging on the image source that a significant step forward in the state of colorimetry would be achieved. This area has been addressed and significant improvements have been added to colorimetry by adding the capability to read ambient light (specifically that light that is impinging upon the image source) in real time and developing supporting algorithms to compensate for deleterious effects.

As noted above, prior art colorimeters measure ambient light by removing the colorimeter body from the image source screen, placing a diffuser on the viewing surface of the colorimeter, and orienting the combination away from the screen to get a reading estimate of the ambient light.

The present invention disclosed herein orients a rear facing ambient sensor on the main printed circuit board (PCB). The rear facing ambient sensor is capable of viewing the incoming ambient light while a set of forward facing color sensors simultaneously read the luminance emanating from the image screen. The ambient viewing path can be in the form of a chamber and orifice or can be fitted with a light-pipe, both means accomplish measurement of the ambient light in a manner that closely matches the incoming direction of most closely captures the effective characteristics of the ambient light. Alternatively, LEDs can be included to provide feedback information including but not limited to: 1) status such as when the colorimeter is calibrating, 2) when there has been a significant change in ambient light.

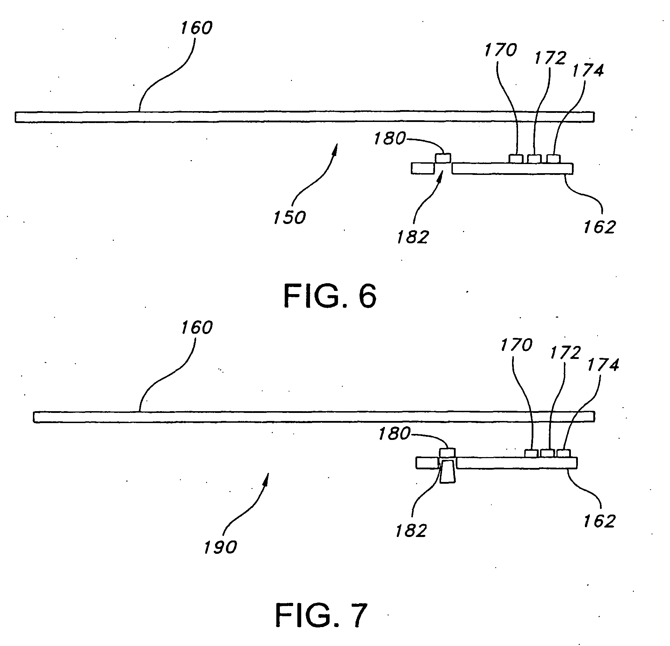

Figure 6 is a simplified schematic of a system 150 for simultaneously measuring ambient light illumination impinging on a source image 160 and the attributes of the luminance emanating from the source image 160. In the embodiment shown, source image 150 is an image displayed on a monitor. System 150 includes a primary colorimeter PCB 162 with sensors 170, 172, and 174 facing the source image 160 to make component readings of the luminance emanating from the source image 160. An ambient sensor 180 faces rearward viewing ambient light impinging on the surface of the source image 160. An aperture or chamber 182 allows passage of the ambient light to the associated rear-facing sensor 180 operably coupled to PCB 162.

Figure 7 is simplified schematic of a system 190 for simultaneously measuring ambient light illumination impinging on the source image 160 and the attributes of the luminance emanating from the source image 160 in accordance with an exemplary alternative embodiment. Just as in Figure 6, the primary colorimeter PCB 162 is operably connected to the sensors 170, 172 and 174 facing the source image 160 to make component readings of the luminance emanating from the source image 160. In addition, the ambient sensor 180 faces rearward viewing ambient light impinging on the source image surface 160. A light pipe 194 is disposed within aperture 182 and directs the ambient light to the associated rear-facing sensor 180 operably coupled to the PCB 162.

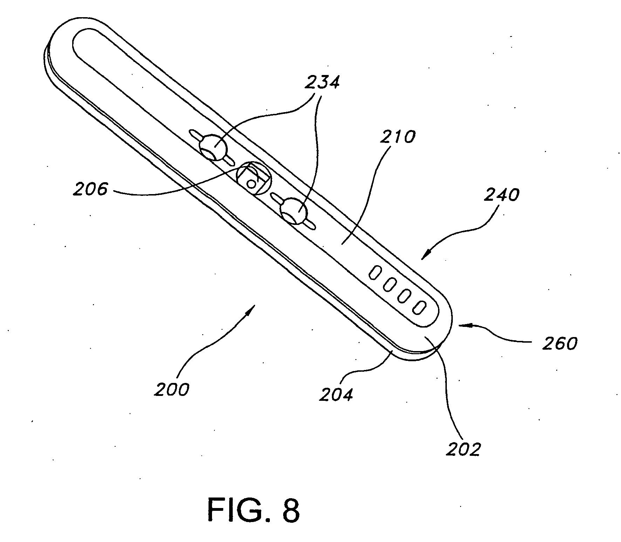

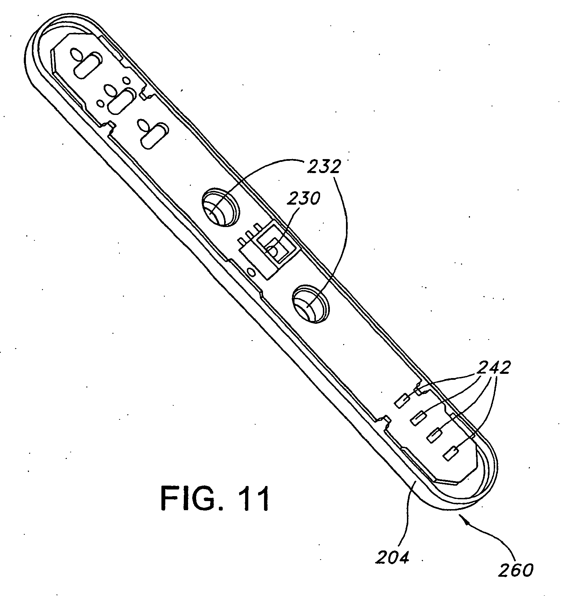

Referring now to Figures 8-12, a colorimeter 200 embodying the elements described with respect to Figures 6 and 7 is illustrated. Colorimeter 200 includes a front cover 202 and a rear cover 204 housing components associated with colorimeter 200. The front cover 202 faces the impinging ambient light while the back cover 204 faces the source image (not shown). The front cover 202 is configured to receive a light pipe 210 for receiving the impinging ambient light. The light pipe 210 includes a lens 206 for directing impinging light to an ambient light sensor aligned therewith. A major portion of the light pipe 210 is shown having an exposed surface that is substantially flush with front cover 202, however, other suitable configurations are contemplated.

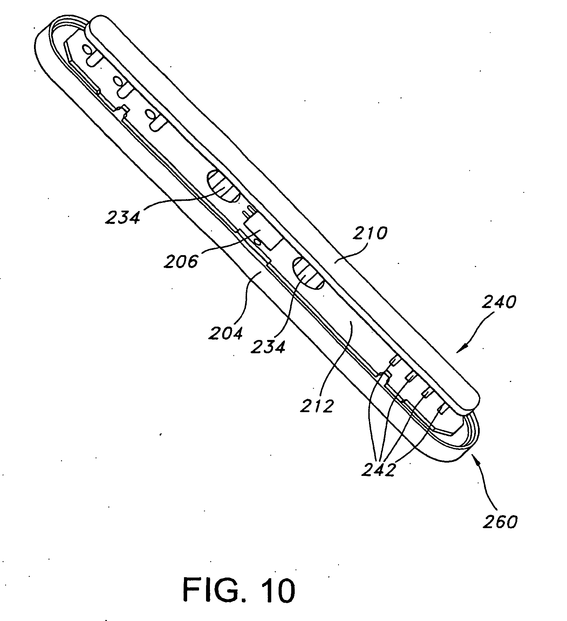

The front and rear covers 202 and 204 enclose a PCB 212 disposed intermediate the light pipe 210 and rear cover 204 as best seen in Figure 10. PCB 212 is a primary colorimeter PCB with sensors 220, 222, and 224 facing the source image (not shown) to make component readings of the luminance emanating from the source image. An ambient sensor 230 faces ambient light impinging on the surface of the source image. The ambient sensor 230 is a light tight package that receives the ambient light directed at the source image and impinging the lens 206 of light pipe 210. A pair of corresponding apertures 232 defined by PCB 212 allow corresponding light pipe cylinders 234 extending from light pipe 210 to extend therethrough to the rear cover 204. Each cylinder 234 is capped with a clear plastic lens 236 Each lens 236 and cylinder 234 allows passage of the light emitted from the source image to pass through the PCB 212 and direct the same to the ambient sensor 230 located on an opposite surface side of the PCB 212 where the three sensors 220, 222 and 224 are disposed.

A means to indicate the status of colorimeter 200 (e.g., calibration) or indicate a change in the ambient illumination may be disposed at an opposite end of the colorimeter from which the sensors 220, 222 and 224 are disposed. The indicating means 240 may include a plurality of LEDs or other display means known in the art to indicate a status or parameter. In an exemplary embodiment, four differently colored LEDs are indicated generally at 242. Depending on which of the differently colored LEDs are lit, one or more lit LEDs or a sequence thereof may indicate the status of calibration or re-calibration of colorimeter 200 and/or indicate that there has been a predetermined change in ambient illumination, for example. However, other parameters or status conditions may be indicated as well.

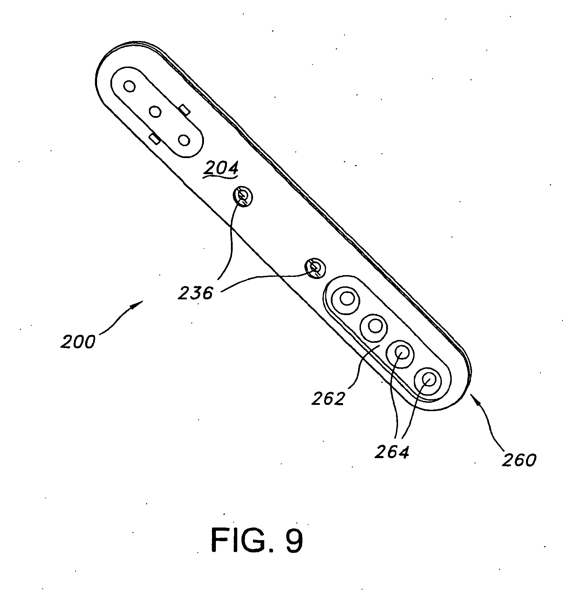

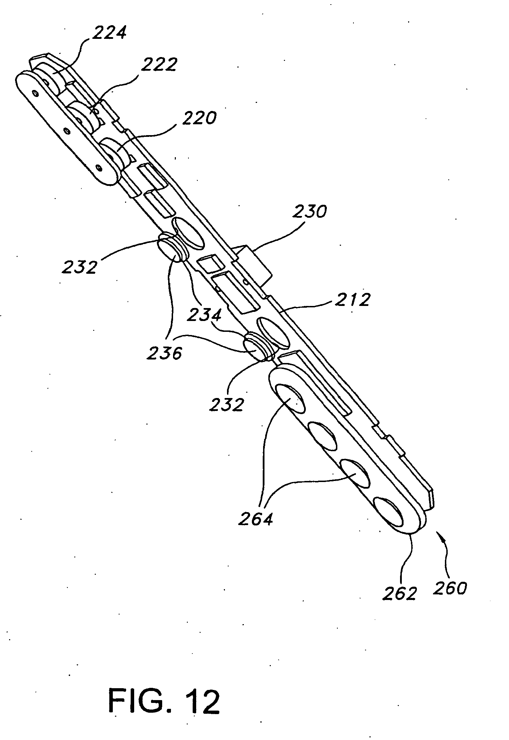

As best seen with reference to Figures 9 and 12, rear cover 204 is configured to receive an external baffle 250 having three apertures 252, 254 and 256 aligned with a respective sensor 220, 222 and 224. The external baffle 250 is illustrated as being substantially flush with a rear surface defining the rear cover 204, but other suitable configurations (e.g., recessed or raised from rear cover 204) are contemplated. The external baffle 250 further defines the field of view for sensors 220, 222 and 224. At an opposite end of the rear cover 204 indicated generally at 260, an attachment means 262 is exposed for attaching the colorimeter 200 to a display monitor (not shown). In an exemplary embodiment as depicted, the attachment means includes a plurality of suction cups (four shown) 264 for releasable attachment to the display surface of the monitor. As shown, the plurality of suction cups are serially aligned with respect to one another, however, other configurations are contemplated. Attachment means 262 may include any known releasable affixing device that allows the colorimeter to be attached to the image source without damage to the same.

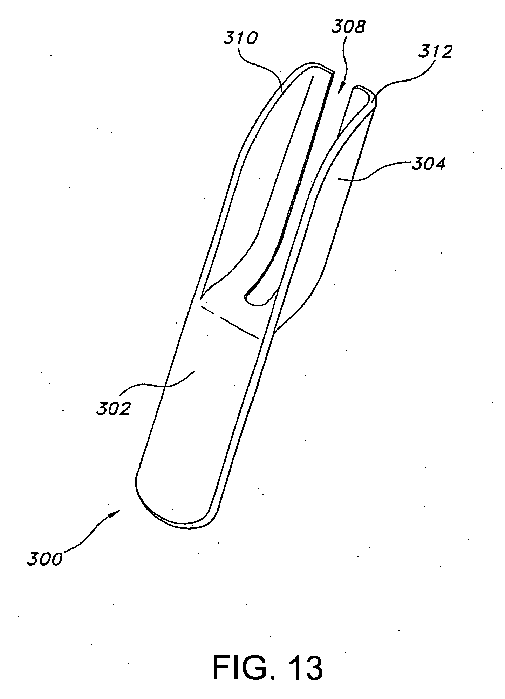

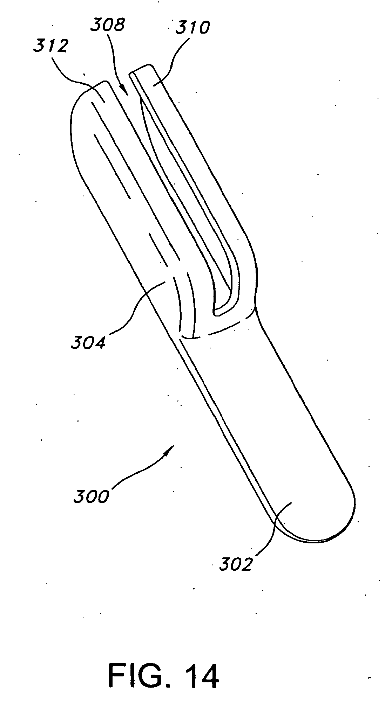

Referring now to Figures 13 and 14, a housing 300 for holding the colorimeter of Figures 8-12 is illustrated. Housing 300 is configured to be affixable to the source image, for example a display monitor other than the display screen, when the colorimeter 200 is not in use. Housing 300 includes a first member 302 and a second member 304 extending from the first member 302. The first member 302 is substantially planar for providing a surface to be affixed to a monitor, for example. The second member 304 extending from the first member 302 is configured to receive at one of the two longitudinal ends defining the colorimeter 300. More specifically, second member 304 is contoured having a similar contour to the end 260 defined by the either the front or rear covers 202, 204, respectively. Further, the second member 304 includes a longitudinal groove 308 substantially bisecting the second member 304 into first and second portions 310 and 312, respectively. The first and second portions 310 and 312, respectively, then can be resiliently displaced relative to each other to releasably receive and secure the colorimeter 200 therewith when not in use. In addition, the plurality of serially aligned suction cups 264 disposed in the second member 304 may provide a tacky surface to provide releasable positive grip between the colorimeter 200 and housing 300.

Measuring the effects of ambient light impinging on a source image and correcting either statically, dynamically in real-time, or both provide significant further improvement to the ability of a colorimeter to provide optimum image processing. Among the relative few low cost implementations of colorimeters, an improved colorimeter results from the present invention discussed herein seamlessly integrated with prior work performed by the applicants. Prior work includes development of software, firmware, algorithms and circuits (largely presented in U.S. Patent No. 5,892,585 and in U.S. Patent Publication No. 2004/0114144. The result is to provide a significant improvement in accuracy, repeatability and other factors of effective colorimetry.

The foregoing description of the embodiments of the invention has been presented for the purposes of illustration and description. It is not intended to be exhaustive or to limit the invention to the precise form disclosed. Many modifications and variations are possible in light of this disclosure. It is intended that the scope of the invention be limited not by this detailed description, but rather by the claims appended hereto.

## Claims

1. A color sensing device for sensing light emitting from a target surface, the device comprising:
a chamber block (145) having at least three overlapping spectral light passages (520) extending through the chamber block (145) configured to allow intake of light from the target surface and to select a preferred field of view between the target surface and a corresponding sensor adapted to detect light from the target surface through the light passage (520), each light passage (520) comprising:
an entry orifice (115) facing the target surface, the entry orifice (115) defined with an entry wall (120) defining an entrance for light emitted from the target surface into the light passage (520);
an exit orifice (116) facing the sensor, the exit orifice (116) defined with an exit wall (121) defining an exit for the emitted light from the light passage (520); and
a chamber (119) intermediate the entry and exit walls (120, 121), the chamber (119) defined by a chamber wall (122) and having a diameter larger than a diameter of the entry orifice (115) and exit orifice (116),
**characterized in that** the entry wall (120) forms a frustoconical orifice, said entry orifice (115) is defined with an entry opening (123) to the chamber block (145) for light entry from the target surface and a first opening (125) to the chamber (119) the entry opening (123) having a diameter smaller than the first opening (125), and
wherein the exit orifice (116) is defined with an exit opening (126) for light exiting the chamber block (145) and a second opening (127) to the chamber (119), said exit opening (126) having a diameter larger than the second opening (127); and
wherein the first and second openings (125, 127) define opposite openings of the chamber (119) connected to the entry and exit walls (120, 121), respectively; and
wherein a diameter of the entry opening (123) to the chamber block (145) is smaller than a diameter of the exit opening (126) to the chamber block (145).

2. The color sensing device of claim 1, wherein the chamber wall (122) is cylindrical.

3. The color sensing device of claim 1, wherein the chamber block (145) is a two part separable chamber block (145).

4. The color sensing device of claim 1, further comprising a baffle (117, 118) having an aperture (130) aligned with the light passage (520) of the chamber block (145), the baffle (117, 118) being disposed inside the chamber and/or outside the chamber in proximity of the entry or exit orifices to eliminate or minimize extraneous light rays that might reach the sensor and degrade the signal-to-noise ratio.

5. The color sensing device of claim 4, wherein the baffle is disposed outside the block and spaced from a respective corresponding entry or exit orifice.

6. The color sensing device of claim 4, wherein the baffle disposed inside the chamber defines the aperture thereof by countersinking opposite surfaces defining the baffle.

7. The color sensing device of one of the preceding claims, the device further comprising:
three or more light sensors (25), each sensor configured to detect light from the target surface;
a sensor locating element (35) having three or more light passages and constituted to align each sensor with a corresponding light passage;
the chamber block (145) operatively coupled in alignment with the sensor locating element and having three or more filter cavities, the light passages of the chamber block corresponding to the three or more filter cavities (41), each light passage of the chamber block in alignment with a corresponding light passage of the sensor locating element,
three or more distinct light filter stacks (40) including one or more filter elements, each filter stack (40) placed in a corresponding one of the filter cavities (41), thereby providing three or more overlapping spectrally selective channels, with each spectrally selective channel designed to provide a pre-defined field of view between the target surface and a corresponding one of the light sensors.

8. The color sensing device of claim 7, wherein each spectrally selective channel is designed to provide a field of view between each sensor and the target surface in the range of +/- 5 to 7 degrees of included angle along a center line optical path from a center of the sensor lens to a central ray emanating from the target surface.

9. The color sensing device of claim 7, further comprising a baffle (250) having an aperture aligned with the light passage of the block, the baffle (250) being disposed inside the chamber and/or outside the chamber in proximity of the entry or exit orifices to eliminate or minimize extraneous light rays that might reach the sensor and degrade the signal-to-noise ratio.

10. The color sensing device of claim 7, wherein color sensing device is constituted to sense a target surface which includes one of a LCD display, illuminated printed or graphic matter, and/or temporally active types including a CRT display or flat panel display.

## Patentansprüche

1. Farbabfühlvorrichtung, um Licht, das von einer Zieloberfläche emittiert wird, abzufühlen, wobei die Vorrichtung umfasst:
einen Kammerblock (145) mit wenigstens drei überlappenden Spektrallichtdurchlässen (520), die sich durch den Kammerblock (145) erstrecken und konfiguriert sind, um Licht von der Zieloberfläche einzulassen und um ein bevorzugtes Gesichtsfeld zwischen der Zieloberfläche und einem entsprechenden Sensor auszuwählen, der dazu ausgelegt ist, Licht von der Zieloberfläche durch den Lichtdurchlass (520) zu detektieren, wobei jeder Lichtdurchlass (520) umfasst:
eine Eintrittsmündung (115), die der Zieloberfläche zugewandt ist, wobei die Eintrittsmündung (115) mit einer Eintrittswand (120) definiert ist, die einen Einlass für das von der Zieloberfläche emittierte Licht in den Lichtdurchlass (520) definiert;
eine Austrittsmündung (116), die dem Sensor zugewandt ist, wobei die Austrittsmündung (116) mit einer Austrittswand (121) definiert ist, die einen Auslass für das von dem Lichtdurchlass (520) emittierte Licht definiert; und
eine Kammer (119) zwischen der Eintritts- und der Austrittswand (120, 121), wobei die Kammer (119) durch eine Kammerwand (122) definiert ist und einen Durchmesser besitzt, der größer als der Durchmesser der Eintrittsmündung (115) und der Austrittsmündung (116) ist,
**dadurch gekennzeichnet, dass** die Eintrittswand (120) eine kegelstumpfförmige Mündung bildet, wobei die Eintrittsmündung (115) mit einer Eintrittsöffnung (123) in den Kammerblock (145) definiert ist, um Licht von der Zieloberfläche einzulassen, und mit einer ersten Öffnung (125) in die Kammer (119) definiert ist, wobei die Eintrittsöffnung (123) einen Durchmesser hat, der kleiner als die erste Öffnung (125) ist, und
wobei die Austrittsmündung (116) mit einer Austrittsöffnung (126) definiert ist, um Licht aus dem Kammerblock (125) auszulassen, und mit einer zweiten Öffnung (127) in die Kammer (119) definiert ist, wobei die Austrittsöffnung (126) einen Durchmesser hat, der größer als die zweite Öffnung (127) ist; und
wobei die erste und die zweite Öffnung (125, 127) gegenüberliegende Öffnungen der Kammer (119) definieren, die mit der Eintrittswand bzw. mit der Austrittswand (120, 121) verbunden sind; und
wobei ein Durchmesser der Eintrittsöffnung (123) in den Kammerblock (145) kleiner ist als ein Durchmesser der Austrittsöffnung (126) in den Kammerblock (145).

2. Farbabfühlvorrichtung nach Anspruch 1, wobei die Kammerwand (122) zylindrisch ist.

3. Farbabfühlvorrichtung nach Anspruch 1, wobei der Kammerblock (145) ein zweiteiliger, trennbarer Kammerblock (145) ist.

4. Farbabfühlvorrichtung nach Anspruch 1, die ferner eine Dämpfungseinrichtung (117, 118) mit einer auf den Lichtdurchlass (520) des Kammerblocks (145) ausgerichteten Blende (130) umfasst, wobei die Dämpfungseinrichtung (117, 118) in der Kammer und/oder außerhalb der Kammer in der Nähe der Eintritts- oder Austrittsmündungen angeordnet ist, um Fremdlichtstrahlen, die den Sensor erreichen und das Signal/Rausch-Verhältnis verschlechtern könnten, zu beseitigen oder zu minimieren.

5. Farbabfühlvorrichtung nach Anspruch 4, wobei die Dämpfungseinrichtung außerhalb des Blocks angeordnet und von einer jeweils entsprechenden Eintritts- oder Austrittsmündung beabstandet ist.

6. Farbabfühlvorrichtung nach Anspruch 4, wobei die Dämpfungseinrichtung, die in der Kammer angeordnet ist, ihre Blende durch Ansenken gegenüberliegender Oberflächen, die die Dämpfungseinrichtung definieren, definiert.

7. Farbabfühlvorrichtung nach einem der vorhergehenden Ansprüche, wobei die Vorrichtung ferner umfasst:
drei oder mehr Lichtsensoren (25), wobei jeder Sensor konfiguriert ist, um Licht von der Zieloberfläche zu detektieren;
ein Sensorlokalisierungselement (35) mit drei oder mehr Lichtdurchlässen, das ausgebildet ist, um den Sensor auf einen entsprechenden Lichtdurchlass auszurichten;
den Kammerblock (145), der in Ausrichtung auf das Sensorlokalisierungselement funktional gekoppelt ist und drei oder mehr Filterhohlräume besitzt, wobei die Lichtdurchlässe des Kammerblocks den drei oder mehr Filterhohlräumen (41) entsprechen, wobei jeder Lichtdurchlass des Kammerblocks auf einen entsprechenden Lichtdurchlass des Sensorlokalisierungselements ausgerichtet ist, und
drei oder mehr verschiedene Lichtfilterstapel (40), die ein oder mehr Filterelemente enthalten, wobei jeder Filterstapel (40) in einem Entsprechenden der Filterhohlräume (41) angeordnet ist, um dadurch drei oder mehr überlappende spektral selektive Kanäle zu schaffen, wobei jeder spektral selektive Kanal so entworfen ist, dass er ein im Voraus definiertes Gesichtsfeld zwischen der Zieloberfläche und einem Entsprechenden der Lichtsensoren schafft.

8. Farbabfühlvorrichtung nach Anspruch 7, wobei jeder spektral selektive Kanal so entworfen ist, dass ein Gesichtsfeld zwischen jedem Sensor und der Zieloberfläche im Bereich von ±5 bis ±7 Grad des eingeschlossenen Winkels längs eines optischen Mittellinienwegs von einem Zentrum der Sensorlinse zu einem Mittelstrahl, der von der Zieloberfläche austritt, geschaffen wird.

9. Farbabfühlvorrichtung nach Anspruch 7, die ferner eine Dämpfungseinrichtung (250) mit einer auf den Lichtdurchlass des Blocks ausgerichteten Blende umfasst, wobei die Dämpfungseinrichtung (250) in der Kammer und/oder außerhalb der Kammer in der Nähe der Eintritts- oder Austrittsmündungen angeordnet ist, um Fremdlichtstrahlen, die den Sensor erreichen könnten und das Signal/RauschVerhältnis verschlechtern könnten, zu beseitigen oder zu minimieren.

10. Farbabfühlvorrichtung nach Anspruch 7, wobei die Farbabfühlvorrichtung gebildet ist, um eine Zieloberfläche abzufühlen, die eine LCD-Anzeige, einen beleuchteten gedruckten oder graphischen Gegenstand und/oder temporär aktive Typen einschließlich einer CRT-Anzeige oder einer Flachbildanzeige umfasst.

## Revendications

1. Dispositif de détection de couleur pour la détection des émissions lumineuses depuis une surface cible, le dispositif comprenant :
un bloc de chambre (145) comportant au moins trois passages lumineux spectraux se chevauchant (520) s'étendant à travers le bloc de chambre (145) configuré pour permettre l'entrée de lumière depuis la surface cible et pour sélectionner un champ visuel préféré entre la surface cible et un capteur correspondant adapté pour détecter la lumière provenant de la surface cible à travers le passage lumineux (520), chaque passage lumineux (520) comprenant :
un orifice d'entrée (115) orienté face à la surface cible, l'orifice d'entrée (115) étant défini avec une paroi d'entrée (120) définissant une entrée pour la lumière émise depuis la surface cible dans le passage lumineux (520),
un orifice de sortie (116) orienté face au capteur, l'orifice de sortie (116) étant défini avec une paroi de sortie (121) définissant une sortie pour la lumière émise depuis le passage lumineux (520) ; et
une chambre (119) entre les parois d'entrée et de sortie (120, 121), la chambre (119) étant définie par une paroi de chambre (122) et ayant un diamètre supérieur à un diamètre de l'orifice d'entrée (116) et l'orifice de sortie (116),
**caractérisé en ce que** la paroi d'entrée (120) forme un orifice tronconique, ledit orifice d'entrée (115) est défini avec une ouverture d'entrée (123) au bloc de chambre (145) pour l'entrée de la lumière depuis la surface cible, et une première ouverture (125) de la chambre (119), l'ouverture d'entrée (123) ayant un diamètre inférieur à la première ouverture (125) ; et
dans lequel l'orifice de sortie (116) est défini avec une ouverture de sortie (126) pour la lumière sortant du bloc de chambre (145) et une seconde ouverture (127) de la chambre (119), ladite ouverture de sortie (126) ayant un diamètre supérieur à la seconde ouverture (127) ; et
dans lequel la première et la seconde ouvertures (125, 127) définissent des ouvertures opposées de la chambre (119) raccordées aux parois d'entrée et de sortie (120, 121), respectivement ; et
dans lequel un diamètre de l'ouverture d'entrée (123) du bloc de chambre (145) est inférieur à un diamètre de l'ouverture de sortie (126) du bloc de chambre (145).

2. Dispositif de détection de couleur selon la revendication 1, dans lequel la paroi de la chambre (122) est cylindrique.

3. Dispositif de détection de couleur selon la revendication 1, dans lequel le bloc de chambre (145) est un bloc de chambre (145) séparable en deux parties.

4. Dispositif de détection de couleur selon la revendication 1, comprenant également un déflecteur (117, 118) comportant une ouverture (130) alignée avec le passage lumineux (520) du bloc de chambre (145), le déflecteur (117, 118) étant disposé à l'intérieur de la chambre et/ou à l'extérieur de la chambre à proximité des orifices d'entrée ou de sortie pour éliminer ou minimiser les rayons lumineux étrangers susceptibles d'atteindre le capteur et de dégrader le rapport signal sur bruit.

5. Dispositif de détection de couleur selon la revendication 4, dans lequel le déflecteur est disposé à l'extérieur du bloc et espacé d'un orifice d'entrée ou de sortie correspondant respectif.

6. Dispositif de détection de couleur selon la revendication 4, dans lequel le déflecteur disposé à l'intérieur de la chambre définit l'ouverture de celle-ci en fraisant les surfaces opposées définissant le déflecteur.

7. Dispositif de détection de couleur selon l'une quelconque des revendications précédentes, le dispositif comprenant également :
trois capteurs de lumière (25) ou plus, chaque capteur étant configuré pour détecter la lumière en provenance de la surface cible ;
un élément de localisation du capteur (35) comprenant trois passages lumineux ou plus et constitué pour aligner chaque capteur avec un passage lumineux correspondant ;
le bloc de chambre (145) étant couplé opérationnellement en alignement avec l'élément de localisation du capteur et comprenant trois cavités de filtre ou plus, les passages lumineux du bloc de chambre correspondant aux trois cavités de filtre (41) ou plus, chaque passage lumineux du bloc de chambre étant en alignement avec un passage lumineux correspondant de l'élément de localisation du capteur,
trois piles de filtres lumineux (40) distincts ou plus comprenant un ou plusieurs éléments de filtre, chaque pile de filtres (40) étant placée dans l'une correspondante des cavités de filtre (41), fournissant ainsi trois canaux sélectifs ou plus se chevauchant spectralement, chaque canal spectralement sélectif étant conçu pour fournir un champ visuel prédéfini entre la surface cible et l'un correspondant des capteurs lumineux.

8. Dispositif de détection de couleur selon la revendication 7, dans lequel chaque canal spectralement sélectif est conçu pour fournir un champ visuel entre chaque capteur et la surface cible dans la plage de +/- 5 à 7 degrés d'angle compris le long d'un trajet optique central depuis un centre de la lentille du capteur à un rayon central émanant de la surface cible.

9. Dispositif de détection de couleur selon la revendication 7, comprenant également un déflecteur (250) comportant une ouverture alignée avec le passage lumineux du bloc, le déflecteur (250) étant disposé à l'intérieur de la chambre et/ou l'extérieur de la chambre à proximité des orifices d'entrée ou de sortie pour éliminer ou minimiser les rayons lumineux étrangers susceptibles d'atteindre le capteur et dégrader le rapport signal sur bruit.

10. Dispositif de détection de couleur selon la revendication 7, dans lequel le dispositif de détection de couleur est constitué pour détecter une surface cible comprenant un élément parmi un écran LCD, une matière imprimée ou graphique éclairée, et/ou des types temporairement actifs comprenant un affichage TRC ou un affichage à écran plat.
